# EUROPÄISCHE PATENTSCHRIFT

(11) **EP 0 647 555 B1**
(45) Veröffentlichungstag und Bekanntmachung des Hinweises auf die Patenterteilung: **10.12.1997**
(21) Anmeldenummer: 94810532.5
(22) Anmeldetag: 14.09.1994
(51) Int. Cl.: B62D 33/04, B61D 17/04, F16B 7/04

(54) **Eckwinkel**
Corner joining piece
Pièce d'assemblage d'angle

(30) Priorität: 12.10.1993 CH 3060/93
(43) Veröffentlichungstag der Anmeldung: 12.04.1995
(73) Patentinhaber: Alusuisse Technology & Management AG, 8212 Neuhausen am Rheinfall (CH)
(72) Erfinder: Röllin, Ulrich, CH-8048 Zürich (CH)

(56) Entgegenhaltungen:
- EP-A- 0 136 264
- CH-A- 627 982

## Beschreibung

Die Erfindung betrifft eine lösbare Eckverbindung zwischen zwei in einem Winkel stehenden Leichtmetallprofilen mit wenigstens einer eine Längsöffnung aufweisenden, beidseits hinterschnittenen Nut mit einem angeformten Flansch und einem in Längsrichtung der Nut in einem Abstand zur Hinterschneidung befindlichen Profilsteg, wobei die Verbindung durch einen wenigstens teilweise in die nutenartige Vertiefung der Leichtmetallprofile einführbaren Eckwinkel geschieht, wobei der Eckwinkel zwei im Winkel befindliche Schenkel mit je einer federartigen Anformung aufweist und jeder Schenkel des Eckwinkels an den entsprechenden Leichtmetallprofilen durch wenigstens zwei Klemm-Schraubverbindungen festgelegt ist, wobei jede Schraube in ein Gewinde eines von vorn in die Nut einführbaren Klemmplättchens eingreift und das Klemmplättchen in die Hinterschneidungen der nutartigen Vertiefungen greift.

Aus der CH 627 982 sind Verbindungen von Metallprofilen mittels Eckverbindungsstücken, insbesondere für den Zusammenbau von Gerippestrukturen für Wagenkasten von Strassen- und Schienenfahrzeugen bekannt. Das dabei beschriebene Eckverbindungsstück weist federartige Anformungen auf, welche in nutenartige Vertiefungen der Metallprofile geführt und durch Schraubverbindungen festgelegt werden. Die Schraubverbindungen enthalten Klemmstücke, welche in die nutenartigen Vertiefungen der Metallprofile eingesetzt und sodann in Hinterschneidungen der nutenartigen Vertiefungen eingeschwenkt werden.

Derartige auf Reibschluss basierende Profilverbindungen erlauben in Profillängsrichtung nur eine geringe Kraftübertragung, so dass solche Verbindungen zur Erfüllung ihrer vorgesehenen Aufgabe oft eine zusätzliche mechanische Verstärkung wie beispielsweise eine Schweissverbindung benötigen. Derartige Verstärkungen sind in ihrer Herstellung jedoch relativ aufwendig und erschweren zudem ein allfälliges späteres Lösen der Eckverbindung.

Aufgabe vorliegender Erfindung ist es, eine lösbare Klemmverbindung der eingangs genannten Art zu schaffen, welche oben dargelegte Nachteile vermeidet und durch eine Kombination einer Reibschluss-/Formschlussverbindung auch in Profillängsrichtung hohen Beanspruchungen gewachsen ist.

Erfindungsgemäss wird dies dadurch erreicht, dass jeder Schenkel des Eckwinkels wenigstens zwei in einem Abstand befindliche Bohrungen für die Aufnahme der in die Gewinde der Klemmplättchen eingreifenden Schrauben sowie wenigstens ein zwischen diesen Bohrungen liegendes am Eckwinkel befestigtes und an seinem freien Ende mit einer Spitze versehenes stiftförmiges Element aufweist und die freie Länge dieses stiftförmigen Elementes gegenüber dem Abstand zwischen dem Profilsteg und der sich in der nutenförmigen Vertiefung des Profiles befindlichen Feder des Eckwinkels ein Übermass aufweist, so dass die Spitze wenigstens teilweise in eine Verformung des Profilsteges eingreift.

In einer bevorzugten Ausführungsform stellt die für die erfindungsgemässe Verbindung benötigte Verformung des Profilsteges eine Materialverformung dar, welche durch die von den Klemm-Schraubverbindungen über Hebelarme auf das stiftförmige Element übertragenen Kräfte bewirkt wird, wobei die Hebelarme jeweils durch den Abstand des stiftförmigen Elementes vom jeweiligen Bohrloch für die Klemm-Verbindung definiert sind.

Damit der für die erfindungsgemässe Verbindung notwendige Formschluss des Eckwinkels mit den zu verbindenen Profilen zu tragen kommt, muss die freie Länge des stiftförmigen Elementes derart eingestellt werden, dass diese grösser ist als der Abstand zwischen dem Profilsteg und der in die nutenförmige Vertiefung (Nut) formschlüssig eingesetzten Feder des Eckwinkels, d.h. das stiftförmige Element muss gegenüber dem Abstand zwischen dem Profilsteg und der in das Profil eingesetzten Feder ein Übermass aufweisen. Wenn der Werkstoff des Profilsteges weicher ist als derjenige der Spitze des stiftförmigen Elementes, wird durch die beim Festziehen der Klemm-Schraubverbindungen über den Hebelarm wirkenden Kräfte die Spitze des stiftförmigen Elementes zumindest teilweise in den Profilsteg gedrückt. Die resultierende Verformung des Profilsteges bewirkt zusammen mit der in ihr lagernden Spitze des stiftförmigen Elementes einen Formschluss.

Die erfindungsgemässe Verbindung mit dem ihr eigenen Formschluss eignet sich zweckmässigerweise für eine lösbare Eckverbindung von Leichtmetallprofilen, wie beispielsweise Profilen aus Aluminium. Mit der Bezeichnung Aluminium sind in vorliegender Erfindung auch alle handelsüblichen Aluminiumlegierungen umfasst. Bevorzugt werden Aluminium und dessen Legierungen.

Der für die erfindungsgemässe Verbindung benötigte Eckwinkel weist zwei in einem Winkel befindliche Schenkel mit je einer federförmigen Anformung auf. Dabei können die Schenkel des Eckwinkels einen beliebigen Winkel zwischen 0 und 180° einschliessen. Bevorzugt beträgt der Winkel zwischen beiden Schenkeln jedoch 90°. Die federförmigen Anformungen (Federn) der beiden Eckwinkel-Schenkel weisen entweder eine zur hinterschnittenen, nutenförmigen Vertiefung passgenaue Form auf, oder aber ihre Breite ist schmaler als die Breite der hinterschnittenen Nut. Zudem sind die Eckwinkel-Schenkel zweckmässigerweise derart geformt, dass deren Breite kleiner ist als der durch die beiden an die Profile angeformten Flansche definierte Abstand. Eine passgenaue Ausführung der Schenkel mit den an die Profile angeformten Flansche unterstützt neben einer mit der hinterschnittenen Nut passgenauen Feder die seitliche Führung der Profil-Eckwinkel-Verbindung.

Zweckmässigerweise weisen die für die Verbindung benötigten Eckwinkel an jedem Schenkel wenigstens zwei für die Klemmschraubverbindungen benötigte Bohrungen auf. Erfindungsgemäss befindet sich zwischen diesen Bohrungen das stiftförmige Element. In einer bevorzugten Ausführungsform ist das stiftförmig Element mittig zwischen den Bohrungen angeordnet. Damit die für den Formschluss benötigte Verformung des Profilsteges durch über den Hebelarm wirkende Kräfte beim Anziehen der Klemm-Schraubverbindungen bewirkt wird, muss der Hebelarm eine gewisse Mindestlänge aufweisen. Erfindungsgemäss hat sich ein Zentrumsabstand der Bohrungen von beispielsweise mindestens dem 3-fachen, zweckmässig 6- bis 18-fachen und bevorzugt 6- bis 12-fachen Bohrlochdurchmesser als günstig erwiesen.

Durch die Reibschluss-/Formschlussverbindung zwischen den Eckwinkel-Schenkeln und den Profilen ist die erfindungsgemässe Verbindung auch in Profillängsrichtung hohen mechanischen Beanspruchungen gewachsen und benötigt somit keine zusätzlichen Schweissnähte, Schraub- oder Nietverbindungen. Damit können für die Eckwinkel sämtliche handelsüblichen Werkstoffe, die eine der Anwendung entsprechende Festigkeit und Elastizität ausweisen, verwendet werden. Bevorzugt werden jedoch Eckwinkel aus Aluminium oder dessen Legierungen eingesetzt.

Die stiftförmigen Elemente können beispielsweise dornartige Ansätze der Eckwinkel-Schenkel darstellen, welche als solche trennfest mit dem Eckwinkel verbunden sind. Die dornartigen Ansätze können somit beispielsweise eingeschraubte, angeschweisste oder aufgeklebte Stifte sein. Diese Stifte können einen beliebigen polygonalen, beispielsweise rechteckigen oder runden Querschnitt aufweisen.

Der Eckwinkel und die stiftförmigen Elemente können jedoch auch einstückig, beispielsweise in Form eines Gussstückes, ausgebildet sein, so dass der Eckwinkel an seinen Schenkeln angeformte dornartige Ansätze als trennfest mit dem Eckwinkel verbundene stiftförmige Elemente enthält.

Einschraubbare stiftförmige Elemente benötigen an ihrem Umfang wenigstens teilweise ein Gewinde. Als stiftförmige Elemente können auch Schrauben, beispielsweise Sechskantschrauben, Innensechskantschrauben, Halbrundschrauben, Senkschrauben, Zylinderschrauben oder aber eingepresste Nieten oder Bolzen und bevorzugt Gewindestifte eingesetzt werden.

Die für die in die Schenkel der Eckwinkel einschraubbaren stiftförmigen Elemente benötigten und mit einem Gewinde versehenen Bohrungen weisen dabei zweckmässigerweise einen kleineren Durchmesser als die Bohrlochdurchmesser der Klemm-Schraubverbindungen auf.

Die Spitzen der stiftförmigen Elemente können aus einem härteren Werkstoff als der Rest dieser Elemente bestehen und können auch härter sein als die zu verbindenden Profile resp. der zu verformenden Profilstege.

Sofern der Werkstoff der stiftförmigen Elemente, respektive deren Spitzen, gleich hart oder härter als derjenige der Profilstege, bzw. der Verformungszonen der Profilstege, ist, können sämtliche handelsüblichen Werkstoffe für die stiftförmigen Elemente zur Anwendung kommen.

In einer bevorzugten Ausführungsform der erfindungsgemässen Eckverbindung bestehen die für die Verbindung benötigten Profilstege, bzw. nur der zu verformende Teil der Profilstege (Verformungszone), gegenüber dem restlichen Profilwerkstoff, respektive gegenüber dem Werkstoff der Spitzen der stiftförmigen Elemente ganz oder teilweise aus weicherem Material.

In einer weiteren bevorzugten Ausführungsform der erfindungsgemässen Verbindung sind die Profilstege derart vorgeformt, dass die stiftförmigen Elemente in diese Verformungen eingreifen.

Die mit einem Gewinde versehene Bohrung für die Aufnahme eines stiftförmigen Elementes kann ein Sackloch oder eine durchgehende Bohrung darstellen. Im ersten Fall werden die stiftförmigen Elemente entsprechend dem erforderlichen Übermass ihrer freien Länge eingeschraubt und können dann erfindungsgemäss in dieser Position mittels einer Schraubensicherungsmasse fixiert werden. Bei Verwendung einer durchgehenden, mit einem Gewinde versehenen Bohrung können die stiftförmigen Elemente entweder vorgängig dem Einsetzen des Eckwinkel-Schenkels in die nutförmige Vertiefung des Profils eingeschraubt und auf das Übermass ihrer freien Länge eingestellt werden, oder die stiftförmigen Elemente können möglicherweise auch erst nach dem Einsetzen des Eckwinkel-Schenkels in die entsprechende Profilnut in die Gewindebohrung des Eckwinkels geschraubt und entsprechend dem erforderlichen Übermass eingestellt werden. Bei Verwendung von schraubbaren stiftförmigen Elementen wird nach ihrer Einstellung auf das erforderliche Übermass ihrer freien Länge diese Position zweckmässig mittels einer Schraubensicherungsmasse fixiert.

Die Klemm-Schraubverbindungen können bereits vor dem Einfügen des Eckwinkels in die nutförmigen Vertiefungen der Profile an den entsprechenden Eckwinkel-Schenkeln festgelegt werden. Beim Zusammenfügen der Profile mit dem Eckwinkel selbst werden dann die Federn des Eckwinkels in die Nuten der Profile gestossen und dabei die entsprechenden Klemmstücke in Längsrichtung in die Nutenöffnung eingeführt. Da das Klemmplättchen eine Gewindebohrung aufweist, in welche eine den Eckwinkel durchsetzende Schraube eingreift, kann es nunmehr in einfacher Weise durch Drehung der Schraube in Hinterschneidungen der nutartigen Vertiefung des Profiles eingeschwenkt werden. Die Klemm-Schraub-Verbindung geschieht somit ausschliesslich von der Aussenseite des Eckwinkels her, so dass kein Gegenhaltewerkzeug für das Klemmplättchen notwendig ist. Die Klemmplättchen können beispielsweise als Parallelogramm ausgebildet sein, wobei der grössere Durchmesser des Parallelogramms grösser ist als die Nutweite. Hierdurch verkeilt sich das Klemmplättchen automatisch beim Festziehen der Klemmschrauben an den Nutinnenwänden, so dass ein Durchdrehen des Klemmplättchens vermieden wird.

Vorliegende Erfindung wird beispielhaft an den Figuren 1 bis 6 weiter erläutert.

Figur 1 zeigt eine perspektivische Darstellung einer lösbaren Eckverbindung nach vorliegender Erfindung.

Figur 2 zeigt eine perspektivische Ansicht eines Eckwinkels mit an einem Schenkel festgelegten Klemmplättchen.

Figur 3 zeigt eine Seitenansicht eines mit einem Profil verbundenen Eckwinkels.

Figur 4 zeigt eine perspektivische Ansicht des in Fig. 3 dargestellten Eckwinkels.

Figur 5 zeigt eine Seitenansicht eines mit einem Profil verbundenen Eckwinkels in anderer Ausführungsform als in Fig. 3 dargestellt.

Figur 6 zeigt eine perspektivische Ansicht des in Fig. 5 gezeigten Eckwinkels.

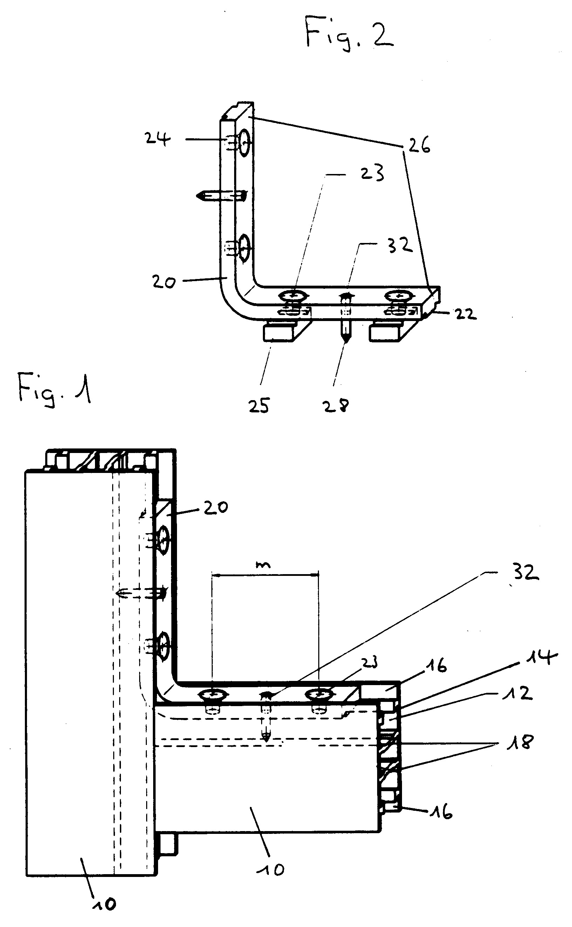

In Figur 1 ist eine Eckverbindung zwischen zwei Profilen 10 mit je zwei eine Längsöffnung aufweisende, beidseits hinterschnittene Nuten 12 dargestellt. Beidseits der Nut ist zudem ein als Führung des Eckwinkels 20 dienender Flansch 16 angeformt. In einem Abstand zu den Hinterschneidungen 14 befinden sich die Profilstege 18 der Profile 10. Die mechanische Verbindung der Profile 10 geschieht mittels wenigstens einem Eckwinkel 20. In Figur 1 ist nur einer von zwei möglichen Eckwinkeln eingezeichnet. Die Federn 22 des Eckwinkels 20 greifen in die nutartigen Vertiefungen 12 der Leichtmetallprofile 10. Bei der in Figur 1 gezeigten Ausführungsform der erfindungsgemässen Eckverbindung entspricht die Höhe der Flansche 16 der über die nutartige Vertiefung 12 hinausragenden Höhe des in die Nut 12 eingesetzten Eckwinkel-Schenkels 26, so dass der obere Rand des Eckwinkel-Schenkels 26 bündig mit der Oberkante der Flansche 16 abschliesst. In Figur 1 sind in jedem Schenkel 26 des Eckwinkels 20 zwei in einem Abstand m befindliche Bohrungen 24 für Senkschrauben 23 eingezeichnet. Die Schrauben 23 können in die Gewindebohrungen der Klemmplättchen 25 eingreifen.

Figur 2 zeigt die perspektivische Ansicht des in Figur 1 gezeigten Eckwinkels 20. In jedem Schenkel sind zwei Durchgangsbohrungen 24 für durchsetzende Senkschrauben 23 erkennbar. An einem Schenkel 26 sind zudem die mit einer Gewindebohrung versehenen Klemmplättchen mittels je einer durchgehenden Schraube 23 befestigt. Zudem ist an jedem Schenkel eine angeformte Feder 22 sowie ein stiftförmiges Element 28 erkennbar, welches mit dem entsprechenden Schenkel beispielsweise durch Einschrauben in eine Gewindebohrung 32, Kleben, Schweissen, Nieten etc. fest verbunden ist. Nach Einführen des Eckwinkels 20 in ein Profil 10 greift die am eingeführten Schenkel angeformte Feder 22 in die Nut 12 des Profiles 10 und die Klemmplättchen 25 greifen in die Hinterschneidungen 14 der Nut 12.

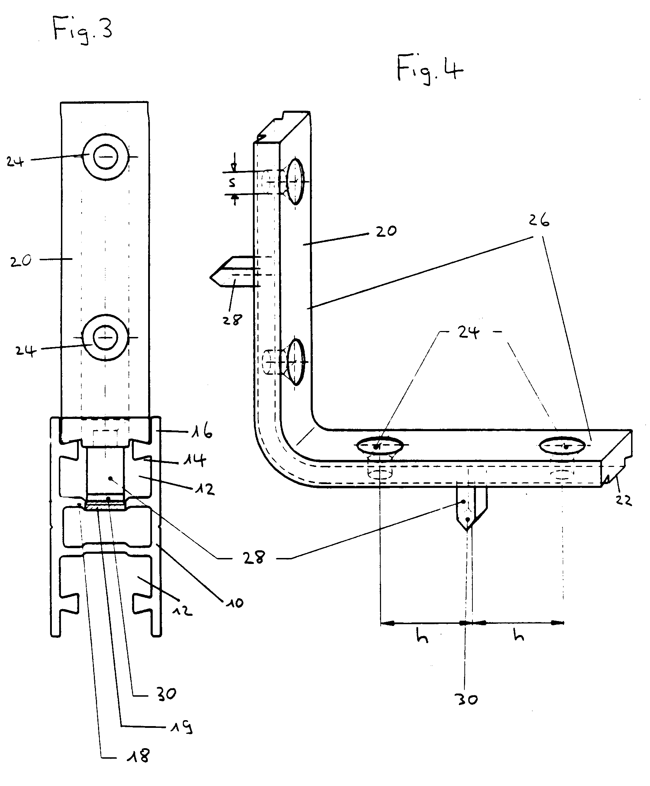

Figur 3 zeigt eine Seitenansicht eines mit einem Profil 10 verbundenen Eckwinkels 20. Am Profil 10 sind deutlich die beiden nutenförmigen Vertiefungen 12, deren Hinterschneidungen 14, die angeformten Flansche 16 sowie die Profilstege 18 zu erkennen.

Am Eckwinkel 20 sind Bohrlöcher 24 für Senkschrauben erkennbar. Wie in der Figur 3 zu sehen ist, greift die federförmige Anformung des Schenkels 26 in die nutenförmige Vertiefung 12 des Profiles 10. Zudem ist auch das am Eckwinkel 20 festgelegte stiftförmige Element 28 zu erkennen, dessen Spitze 30 teilweise in den Profilsteg 18 eindringt und damit den Formschluss zwischen dem Eckwinkel 20 und dem Profil 10 gewährleistet.

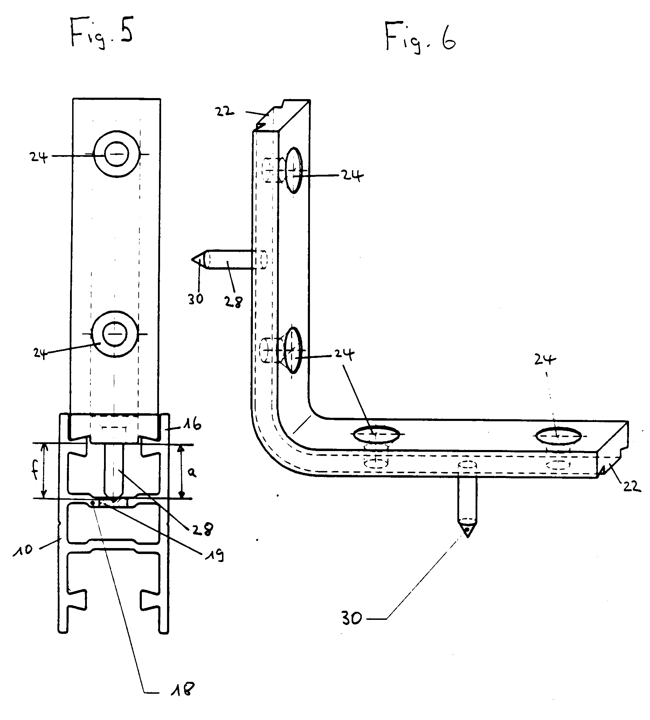

In Figur 4 ist der in Figur 3 gezeigte Eckwinkel 20 in perspektivischer Ansicht dargestellt. In der hier gezeigten Ausführungsform befinden sich die stiftförmigen Elemente 28 mittig in einem Abstand h zu den Bohrungen 24 für die Klemm-Schraub-Verbindungen. Die Durchgangsbohrungen 24 weisen einen Bohrlochdurchmesser s auf. Neben der an den Schenkeln 26 angeformten Federn 22 sind zudem auch die stiftförmigen Elemente 28 mit einer Dreikantprisma förmigen Spitze 30 erkennbar.

Figur 5 zeigt die Seitenansicht einer anderen Ausführungsform eines mit einem Profil verbundenen Eckwinkels. Neben den auch in Figur 3 erkennbaren Elementen sind in Figur 5 die freie Länge f des stiftförmigen Elementes 28 sowie der Abstand a zwischen der in das Profil 10 eingesetzten Feder 22 und dem Profilsteg 18 dargestellt. Die Differenz zwischen der freien Länge f des stiftförmigen Elementes 28 und dem Abstand a ergibt dabei das für den Formschluss erforderliche Übermass des stiftförmigen Elementes 28.

Figur 6 zeigt den in Figur 5 dargestellten Eckwinkel 20 in perspektivischer Ansicht. Zwischen den Durchgangsbohrungen 24 sind auf jedem Schenkel 26 die mit dem Eckwinkel 20 fest verbundenen stiftförmigen Elemente 28 erkennbar. In der hier gezeigten Ausführungsform enthalten die stiftförmigen Elemente 28 kegelförmige Spitzen 30.

Der Profilsteg 18 kann entweder ganz oder nur teilweise, d.h. im Verformbereich 19 des Profilsteges 18, aus weicherem Material als dasjenige des Profils 10, resp. des stiftförmigen Elementes 28, bzw. seiner Spitze 30, bestehen. Dadurch wird das Eindringen der Spitze 30 in den Profilsteg 18 und damit der Formschluss zwischen dem Profil 10 und dem Eckwinkel 20 erleichtert.

Durch die Kombination der Klemm-Schraub-Verbindung mit dem durch das teilweise Eindringen des stiftförmigen Elements 28 in die Verformzone 19 des Profilsteges 18 bewirkten Formschluss ergibt sich erfindungsgemäss eine lösbare Eckverbindung zweier Profile, die in Längs- und Querrichtung hohen mechanischen Beanspruchungen zu genügen vermag.

## Patentansprüche

1. Lösbare Eckverbindung zwischen zwei in einem Winkel stehenden Leichtmetallprofilen (10) mit wenigstens einer eine Längsöffnung aufweisenden, beidseits hinterschnittenen Nut (12) mit wenigstens einem angeformten Flansch (16) und einem in Längsrichtung der Nut (12), in einem Abstand zu den Hinterschneidungen (14) befindlichen Profilsteg (18), wobei die Verbindung durch einen wenigstens teilweise in die Nuten (12) der Leichtmetallprofile (10) einführbaren Eckwinkel (20) geschieht, wobei der Eckwinkel (20) zwei im Winkel befindliche Schenkel (26) mit je einer federartigen Anformung (22) aufweist, und jeder Schenkel (26) des Eckwinkels (20) an den entsprechenden Leichtmetallprofilen (10) durch wenigstens zwei Klemm-Schraubverbindungen festgelegt ist, wobei jede Schraube (23) in ein Gewinde eines von vom in die Nut (12) einführbaren Klemmplättchens (25) eingreift und das Klemmplättchen (25) in die Hinterschneidungen (14) der Nut (12) greift,
dadurch gekennzeichnet, dass
jeder Schenkel (26) des Eckwinkels (20) wenigstens zwei in einem Abstand (m) befindliche Bohrungen (24) für die Aufnahme der in die Gewinde der Klemplättchen (25) eingreifenden Schrauben (23), sowie wenigstens ein zwischen diesen Bohrungen (24) liegendes, am Eckwinkel (20) befestigtes und an seinem freien Ende mit einer Spitze (30) versehenes, stiftförmiges Element (28) aufweist, und die freie Länge (f) dieses stiftförmigen Elementes (28) gegenüber dem Abstand (a) zwischen dem Profilsteg (18) und der sich in der nutenförmigen Vertiefung (12) des Profiles (10) befindlichen Feder (22) des Eckwinkels (20) ein Übermass aufweist, so dass die Spitze (30) wenigstens teilweise in eine Verformung (19) des Profilsteges (18) eingreift.

2. Eckverbindung nach Anspruch 1, dadurch gekennzeichnet, dass die für die Verbindung benötigte Verformung (19) des Profilsteges (18) eine Materialverformung im Profilsteg (18) darstellt, welche durch die von den Klemm-Schraubverbindungen über Hebelarme (h) auf das stiftförmige Element (28) übertragenen Kräfte bewirkt wird, wobei die Hebelarme (h) jeweils durch den Abstand des stiftförmigen Elementes (28) vom jeweiligen Bohrloch (24) für die Klemmverbindung definiert sind.

3. Eckverbindung nach Anspruch 1, dadurch gekennzeichnet, dass der für die Verbindung benötigte Eckwinkel (20) an jedem Schenkel (26) wenigstens zwei für die Klemm-Schraubverbindungen benötigte Bohrungen (24) mit einem Zentrumsabstand (m) von mindestens dem 3-fachen, bevorzugt dem 6- bis 18-fachen und insbesondere dem 6- bis 12-fachen Bohrlochdurchmesser (s) aufweist.

4. Eckverbindung nach Anspruch 1, dadurch gekennzeichnet, dass das für die Verbindung benötigte stiftförmige Element (28) mittig zwischen den Bohrungen (24) jedes Eckwinkel-Schenkels (26) angeordnet ist.

5. Eckverbindung nach Anspruch 1, dadurch gekennzeichnet, dass die für die Verbindung benötigten stiftförmigen Elemente (28) an ihrem Umfang wenigstens teilweise ein Gewinde (32) aufweisen, und die stiftförmigen Elemente (28) in den Eckwinkel (20) eingeschraubt werden, wobei der entsprechende Durchmesser der mit einem Gewinde (32) versehenen Bohrung im Eckwinkel (20) kleiner ist als der Bohrlochdurchmesser (s) für die Klemm-Schraubverbindungen.

6. Eckverbindung nach Anspruch 5, dadurch gekennzeichnet, dass die für die Verbindung benötigten stiftförmigen Elemente (28) entsprechend dem erforderlichen Übermass der freien Länge (f) der stiftförmigen Elemente (28) eingeschraubt und in dieser Position mittels einer Schraubensicherungsmasse fixiert sind.

7. Eckverbindung nach Anspruch 1, dadurch gekennzeichnet, dass die Spitzen (30) der für die Verbindung benötigten spitzenförmigen Elemente (28) aus einem härteren Werkstoff als derjenige der zu verbindenden Profile (10) bzw. der zu verformenden Profilstege (18) oder zumindest deren Verformungszonen (19) sind.

8. Eckverbindung nach Anspruch 1, dadurch gekennzeichnet, dass die für die Verbindung benötigten Profilstege (18) derart verformt sind, dass die stiftförmigen Elemente (28) in diese Verformungen (19) eingreifen.

9. Eckverbindung nach Anspruch 1, dadurch gekennzeichnet, dass die für die Verbindung benötigten Profilstege (18) gegenüber dem Profilwerkstoff bzw. dem Werkstoff der Spitzen (30) der stiftförmigen Elemente (28) ganz oder teilweise aus weicherem Material bestehen.

10. Eckverbindung nach Anspruch 1, dadurch gekennzeichnet, dass die für die Verbindung benötigten stiftförmigen Elemente (28) einen domartigen Ansatz darstellen, der jeweils trennfest mit dem Eckwinkel (20) verbunden ist, und die stiftförmigen Elemente (28) bevorzugt eingeschraubte, angeschweisste oder aufgeklebte Stifte polygonalen, insbesondere rechteckigen, oder runden Querschnittes darstellen.

11. Eckverbindung nach Anspruch 10, dadurch gekennzeichnet, dass die für die Verbindung benötigten stiftförmigen Elemente (28) Schrauben, bevorzugt Sechskantschrauben, Innensechskantschrauben, Halbrundschrauben, Senkschrauben oder Zylinderschrauben, eingepresste Nieten oder Bolzen, oder Gewindestifte darstellen.

12. Eckverbindung nach Anspruch 1, dadurch gekennzeichnet, dass der für die Verbindung benötigte Eckwirkel (20) mit den stiftförmigen Elementen (28) einstückig, vorzugsweise in Form eines Gussstückes, ausgebildet ist.

## Claims

1. Detachable corner joint between two light metal sections (10) at an angle, comprising at least one groove (12) undercut on both sides and having a longitudinal opening with at least one moulded-on flange (16), and a profiled web (18) situated at a distance from the undercuts (14) in the longitudinal direction of the groove (12), the joint being produced by means of a corner angle (20) which can be introduced at least partially into the grooves (12) in the light metal sections (10), the corner angle (20) having two arms (26) at an angle each with a tongue-like moulded-on portion (22), and each arm (26) of the corner angle (20) being secured to the corresponding light metal sections (10) by means of at least two clamping screw joints, each screw (23) engaging in a thread of a clamping plate (25) which can be introduced into the groove (12) from the front and the clamping plate (25) engaging in the undercuts (14) of the groove (12), characterised in that each arm (26) of the corner angle (20) has at least two bores (24) situated at a distance (m) from one another for receiving the screws (23) engaging in the threads of the clamping plates (25), as well as at least one pin-shaped element (28) situated between these bores (24), secured to the corner angle (20) and provided at its free end with a point (30), and the free length (f) of this pin-shaped element (28) is oversized compared to the distance (a) between the profiled web (18) and the tongue (22) of the corner angle (20) situated in the groove-shaped recess (12) in the section (10) so that the point (30) engages at least partially in a deformation (19) of the profiled web (18).

2. Corner joint according to claim 1, characterised in that the deformation (19) of the profiled web (18) required for the joint is a material deformation in the profiled web (18) caused by the forces transmitted from the clamping screw joints via lever arms (h) to the pin-shaped element (28), the lever arms (h) each being defined by the distance between the pin-shaped element (28) and the respective bore hole (24) for the clamping joint.

3. Corner joint according to claim 1, characterised in that the corner angle (20) required for the joint is provided at each arm (26) with at least two bores (24) required for the clamping screw joints with a centre distance (m) at least 3 times, preferably 6 to 18 times and in particular 6 to 12 times the bore hole diameter(s).

4. Corner joint according to claim 1, characterised in that the pin-shaped element (28) required for the joint is arranged centrally between the bores (24) of each corner angle arm (26).

5. Corner joint according to claim 1, characterised in that the pin-shaped elements (28) required for the joint are provided at least partially on their circumferences with a thread (32) and the pin-shaped elements (28) are screwed into the corner angle (20), the corresponding diameter of the bore in the corner angle (20) provided with a thread (32) being smaller than the bore hole diameter (s) for the clamping screw joints.

6. Corner joint according to claim 5, characterised in that the pin-shaped elements (28) required for the joint are screwed in according to the required oversizing of the free length (f) of the pin-shaped elements (28) and are fixed in this position by means of a screw locking compound.

7. Corner joint according to claim 1, characterised in that the points (30) of the pointed elements (28) required for the joint are made of a harder material than that of the sections (10) to be joined or the profiled webs (18) to be deformed or at least the deformation zones (19) thereof.

8. Corner joint according to claim 1, characterised in that the profiled webs (18) required for the joint are deformed in such a manner that the pin-shaped elements (28) engage in these deformations (19).

9. Corner joint according to claim 1, characterised in that the profiled webs (18) required for the joint consist completely or partially of softer material than the section material or the material of the points (30) of the pin-shaped elements (28).

10. Corner joint according to claim 1, characterised in that the pin-shaped elements (28) required for the joint are mandrel-like attachments each inseparably connected to the corner angle (20), and the pin-shaped elements (28) are pins with a polygonal, in particular rectangular or round cross section, preferably screwed in, welded on or glued on.

11. Corner joint according to claim 10, characterised in that the pin-shaped elements (28) required for the joint are screws, preferably hexagonal screws, hexagon socket screws, half-round screws, countersunk screws or cheese-head screws, press-in rivets or bolts, or threaded pins.

12. Corner joint according to claim 1, characterised in that the corner angle (20) required for the joint is made in one piece with the pin-shaped elements (28), preferably in the form of a casting.

## Revendications

1. Jonction de coin détachable entre deux profilés de métal léger disposés sous un angle (10), avec au moins une gorge (12) présentant une ouverture longitudinale et en contre-dépouille des deux côtés, présentant au moins une bride venue de matière (16) et une barrette de profilé (18) en direction longitudinale de la gorge (12) et située à distance des contre-dépouilles (14), la jonction ayant lieu au moyen d'une équerre en coin (20), susceptible d'être introduite au moins partiellement dans les gorges (12) des profilés de métal léger (10), l'équerre en coin (20) comportant deux bras (26) disposés suivant un angle et présentant chacun une forme de ressort (22), et chaque bras (26) de l'équerre en coin (20) étant fixé sur les profilés de métal léger correspondants (10) par au moins deux liaisons de serrage à vis, dans lesquelles chaque vis (23) s'engage dans un taraudage d'une plaquette de serrage (25) susceptible d'être introduite depuis le devant dans la gorge (12), et la plaquette de serrage (25) s'engage dans les contre-dépouilles (14) de la gorge (12),
caractérisée en ce que :
chaque bras (26) de l'équerre en coin (20) comporte au moins deux perçages (24) situés à une distance (m) pour recevoir les vis (23) qui s'engagent dans les taraudages des plaquettes de serrage (25), ainsi qu'au moins un élément (28) en forme de tige, situé entre ces perçages (24), fixé sur l'équerre en coin (20) et pourvu à son extrémité libre d'une pointe (30), et la longueur libre (f) de cet élément en forme de tige (28) présente par rapport à la distance (a) entre la barrette de profilé (18) et le ressort (22) de l'équerre en coin (20), lequel se trouve dans le renfoncement en forme de gorge (12) du profilé (10), un dépassement, de sorte que la pointe (30) s'engage au moins partiellement dans une zone de déformation (19) de la barrette de profilé (18).

2. Jonction de coin selon la revendication 1, caractérisée en ce que la zone de déformation (19) de la barrette de profilé (18) nécessaire pour la jonction, représente une déformation de matériau dans la barrette de profilé (18), laquelle est produite par les forces transmises à l'élément (28) en forme de tige par l'intermédiaire de bras de levier (h) depuis les liaisons de serrage à vis, et les bras de levier (h) étant respectivement définis par la distance de l'élément en forme de tige (28) depuis le trou de perçage respectif (24) pour la liaison de serrage.

3. Jonction de coin selon la revendication 1, caractérisée en ce que l'équerre en angle (20) nécessaire pour la jonction comporte sur chaque bras (26) au moins deux perçages (24) nécessaires pour les liaisons de serrage à vis, avec un entraxe (m) égal au moins à trois fois, et de préférence de 6 à 18 fois et en particulier 6 à 12 fois le diamètre du trou de perçage (s).

4. Jonction de coin selon la revendication 1, caractérisée en ce que l'élément en forme de tige (28) nécessaire pour la jonction est agencé au milieu entre les perçages (24) de chaque bras (26) de l'équerre en coin.

5. Jonction de coin selon la revendication 1, caractérisée en ce que les éléments en forme de tige (28) nécessaires pour la jonction présentent à leur périphérie au moins partiellement un pas de vis (32), et les éléments en forme de tige (28) sont vissés dans l'équerre en coin (20), et le diamètre correspondant du perçage doté d'un taraudage (32) dans l'équerre en coin (20) est plus petit que le diamètre du trou de perçage (s) pour les liaisons de serrage à vis.

6. Jonction de coin selon la revendication 5, caractérisée en ce que les éléments en forme de tige (28) nécessaires pour la jonction sont vissés en correspondance du dépassement de dimensions nécessaire de la longueur libre (f) des éléments en forme de tige (28), et sont fixés dans cette position au moyen d'une masse de blocage pour vis.

7. Jonction de coin selon la revendication 1, caractérisée en ce que les pointes (30) des éléments en forme de tige (28) nécessaires pour la jonction sont en un matériau plus dur que celui des profilés à joindre (10), ou des barrettes de profilés à déformer (18), ou au moins de leur zone de déformation (19).

8. Jonction de coin selon la revendication 1, caractérisée en ce que les barrettes de profité (18) nécessaires pour la jonction sont déformées de telle manière que les éléments en forme de tige (28) s'engagent dans ces zones déformées (19).

9. Jonction de coin selon la revendication 1, caractérisée en ce que les barrettes de profilé (18) nécessaires pour la jonction sont constituées en un matériau entièrement ou partiellement plus tendre que le matériau du profilé, ou que le matériau des pointes (30) des éléments en forme de tige (28).

10. Jonction de coin selon la revendication 1, caractérisée en ce que les éléments en forme de tige (28) nécessaires pour la jonction représentent un talon en forme d'ergot, qui est respectivement relié sans pouvoir être séparé à l'équerre en coin (20), et tes éléments en forme de tige (28) représentent de manière préférée des tiges vissées, soudées ou collées avec des sections polygonates, en particulier rectangulaires, ou encore rondes.

11. Jonction de coin selon la revendication 10, caractérisée en ce que les éléments en forme de tige (28) nécessaires pour la jonction sont des vis, de préférence des vis à tête hexagonale, des vis à empreinte hexagonale, des vis à tête sphérique, des vis à tête noyée, ou des vis cylindriques, des rivets ou des goujons enfoncés à la presse, ou des tiges filetées.

12. Jonction de coin selon la revendication 1, caractérisée en ce que l'équerre en coin (20) nécessaire pour la jonction est réalisée d'une seule pièce, de préférence sous forme d'une pièce de fonderie, avec les éléments en forme de tige (28).
